# EUROPEAN PATENT APPLICATION

(11) **EP 1 959 246 A2**
(43) Date of publication of application: **20.08.2008**
(21) Application number: 07123146.8
(22) Date of filing: 13.12.2007
(51) Int. Cl.: G01K 11/12

(54) **Method of sensing high surface temperature in an aircraft**

(30) Priority: 19.12.2006 US 641225
(71) Applicant: Honeywell International Inc., Morristown, NJ 07962 (US)
(72) Inventor: Pelvich, Charles W., Casa Grande, AZ 85222 (US); Foulk, Dennis L., Glendale, AZ 85304 (US); Polec, Thomas W., Tempe, AZ 85283 (US)
(74) Representative: Buckley, Guy Julian

(57) **Abstract**

A method of sensing high surface temperatures in aircraft applications is provided. The method includes the steps of applying a temperature indicator material on a surface an object in which monitoring exposure to high temperatures is sought. The temperature indicator material is reactive to a pre-determined temperature threshold. The temperature indicator material is next covered with a heat resistant film to protect the material during exposure to operating temperatures and deleterious environmental conditions. An identified visible change in the temperature indicator material provides confirmation of exposure of the surface of the object to temperatures in excess of the pre-determined temperature threshold.

## Description

### FIELD OF THE INVENTION

The present invention generally relates to temperature sensing and, more particularly, to a method of sensing high surface temperatures in aircraft applications.

### BACKGROUND OF THE INVENTION

Many types of temperature sensors are known for indicating or detecting the presence of elevated temperatures on the surface of an object. One such type of sensor is a temperature indicator in the form of a label that includes a layer of material that changes its visible appearance at a pre-determined temperature. The layer of material, also referred to as indicating material, is typically provided on a piece of transparent or translucent foil. The usual arrangement is for the layer of indicating material and a layer of adhesive to be formed on the under-side of the foil during fabrication. In many cases, an optional printed layer is formed on an upper-side of the foil. During use, the foil is adhered to the surface of an object with the layer of indicating material adjacent the surface to be monitored. When the surface of the object reaches a pre-determined temperature, the layer of indicating material irreversibly changes its visible appearance when the pre-determined temperature has been reached. When the optional printed layer is included it may provide further visible indication that the pre-determined temperature has been reached. Currently, these types of commercial temperature sensing labels that are surface mounted to an object are limited to sensing temperatures only up to approximately 300°C.

In another example, temperature sensors are known that use irreversible temperature indicating paint that changes to a variety of specific colors at a specific range of temperatures to indicate the sensing of a pre-determined surface temperature. Due to the chemical composition of the temperature indicating paint, the current temperature limitation of these types of temperature indicating paints is at extremely high temperatures, typically between 1050°C to 1350°C. During use, the temperature indicating paint is applied directly to the surface of the object in which it is desired to monitor the surface temperature. When the surface of the object reaches a pre-determined temperature, the temperature indicating paint changes to a specific color indicating the temperature to which different parts of the object or objects have been subjected. More specifically, different colors represent the progression of the surface temperature through different temperature thresholds. The final color of the irreversible temperature indicating paint is dependent on both the temperature it is subjected to and the time period over which it is held at the raised temperature.

Although these types of temperature sensors are capable of indicating elevated surface temperatures of an object or objects, they are not able to indicate elevated surface temperatures that fall in the range of approximately 300°C to 400°C. In addition, many of these types of temperature indicators are not accurate in that they may be exposed to harmful external conditions, such as fluid, humidity, sand, or the like that surround the object or objects being monitored.

It should thus be appreciated from the above that it would be desirable to provide a method for sensing high surface temperatures of an object in the range of 300°C to 400°C, with a temperature measuring accuracy of +/- 2%. In addition, there is a need for a method of sensing high surface temperatures wherein the sensing device is protected from deleterious external influences in the environment in which the object being monitored is located. Furthermore, other desirable features and characteristics of the present invention will become apparent from the subsequent detailed description of the invention and the appended claims, taken in conjunction with the accompanying drawings and this

### background of the invention.

### BRIEF SUMMARY OF THE INVENTION

There has now been developed a method of sensing a temperature in excess of a pre-determined temperature threshold on a surface of an object. The method comprises the steps of: applying a temperature indicator material to the surface of the object, the temperature indicator material reactive to a pre-determined temperature threshold; positioning a heat resistive pressure sensitive film over the temperature indicator material; exposing the surface of the object to an operating temperature; and determining if there is a visible change in the temperature indicator material, thereby identifying exposure of the surface of the object to the temperature in excess of the pre-determined temperature threshold.

In a further embodiment, still by way of example only, there is provided a method of sensing a temperature in excess of a pre-determined temperature threshold on a surface of a line replaceable unit in an aircraft. The method comprises the steps of: marking the surface of the line replaceable unit with a temperature indicator material reactive to a pre-determined temperature threshold; positioning a heat resistive pressure sensitive film over the temperature indicator material; exposing the surface of the line replaceable unit to an operating temperature; and determining if there is a visible change in the temperature indicator material, thereby identifying exposure of the surface of the line replaceable unit to the temperature in excess of the pre-determined temperature threshold.

Other independent features and advantages of the improved method of sensing high surface temperatures will become apparent from the following detailed description, taken in conjunction with the accompanying drawings which illustrate, by way of example, the principles of the invention.

### BRIEF DESCRIPTION OF THE DRAWINGS

The present invention will hereinafter be described in conjunction with the following drawing figure, wherein like numerals denote like elements, and:

FIG. 1 is a perspective view showing of a first application step by a user in the method of sensing high surface temperatures according to the present invention;

FIG. 2 is a perspective view of a second application step;

FIG. 3 is a perspective view of an additional step in the method of sensing high surface temperatures according to the present invention; and

FIG. 4 is a simplified flow chart illustrating the steps in the method of sensing high surface temperatures according to the present invention.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed

### description of the invention.

Surface temperature sensing is desirable in aircraft applications, and more particularly in the maintenance of aircraft line replaceable units (LRUs), such as a valve, actuator, portion of a turbine engine, or the like due to the deleterious effect high temperatures may have on these units; yet, it is also desirable that erroneous reporting be avoided to deter against unnecessary replacement costs.

Increased surface temperatures of aircraft LRUs are identified according to the present invention with temperature sensors that are manufactured to sense a pre-determined temperature dependent upon the LRU location in the aircraft. The surface temperature of the object is determined by the sensor when placed upon the surface to be monitored, and the triggering threshold, formed as a function of the actual surface temperature, is reached. If the actual surface temperature exceeds the triggering threshold, an irreversible visible change takes effect in the sensor and the LRU is replaced during maintenance of the aircraft; if the actual surface temperature remains below the triggering threshold, no change in visible condition of the sensor occurs and thus no requirement for replacement of the LRU exists.

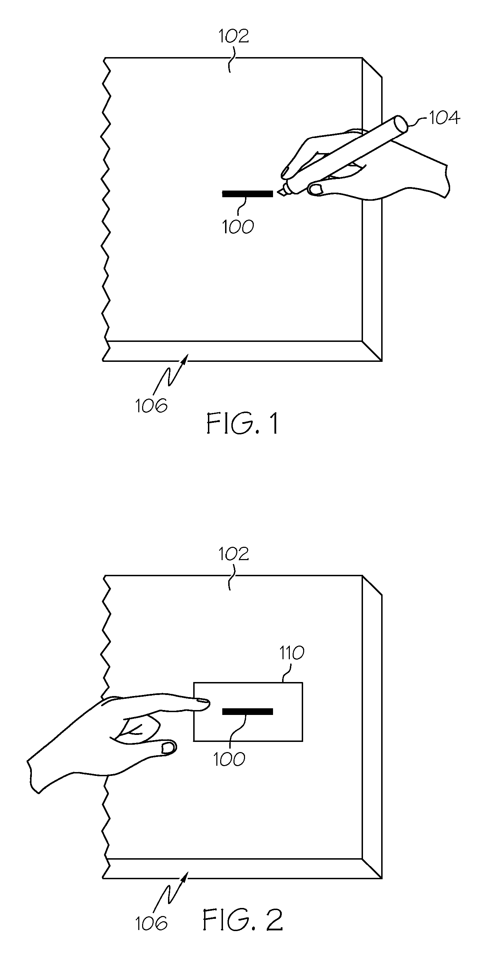

Referring now to FIG. 1, illustrated is a first application step by a user in the method of sensing high surface temperatures according to the present invention. The present invention provides for the application of a temperature indicator material 100 directly on a surface 102 of an object to be monitored. In a preferred embodiment, a temperature indicator marker or crayon 104 formed of, or capable of dispensing, an indicator material that changes state, (i.e. liquefies) at a pre-determined temperature is used to mark the indicator material 100 on the surface 102 of an aircraft LRU 106, such as a valve actuator. The temperature indicator material 100, for example, may be provided by an OMEGAMARKER® crayon. To mark the surface 102, a temperature indicator marker or crayon 104 that dispenses a material reactive at a pre-determined temperature is used to mark on the surface 102 of the aircraft LRU 106. Various temperature indicator markers or crayons 104 may be used, but in a preferred embodiment the temperature indicator marker or crayon 104 dispenses material that is reactive at temperatures up to 400°C, with an accuracy of +/- 2%.

Next, illustrated in FIG. 2 is a second application step by a user in the method of sensing high surface temperatures according to the present invention. Subsequent to marking the surface 102 with the temperature indicator material 100, a substantially transparent protective polyimide adhesive film 110 is positioned to substantially cover the temperature indicator material 100 and adhere to the surface 102 of the aircraft LRU 106. In a preferred embodiment, an electrical grade polyimide film backed with a pre-cured pressure sensitive, high performance, silicone adhesive is used. The film is designed to operate at elevated temperatures, providing durability and consistent performance in extreme temperature environments. Furthermore, the substantially transparent protective polyimide adhesive film 110 is heat-stabilized, thin, and conformable for application to uneven surfaces. The substantially transparent protective polyimide adhesive film 110 may be chosen to be removable without adhesive residue after exposure to heat. The substantially transparent protective polyimide adhesive film 110 includes high strength properties to provide superior resistance to puncture and tear, and resistance to attack by chemicals or other harmful compositions present in the objects installed environment. Commercially available films that may be utilized for the substantially transparent protective polyimide adhesive film 110 and protection of the temperature indicator material 100 include, but are not limited to, KAPTON® tapes and discs which have the desired combination of electrical, thermal, chemical and mechanical properties.

As previously stated, the substantially transparent protective polyimide adhesive film 110 is positioned to substantially cover the temperature indicator material 100 and adhere to the surface 102 of the aircraft LRU 106. Covering of the temperature indicator material 100 provides protection to the temperature indicator material 100 from deleterious external influences that may be present in the environment in which the aircraft LRU 106 is located. More specifically, the substantially transparent protective polyimide adhesive film 110 may provide protection from hydraulic fluids, sand, dust, humidity, or the like that may potentially damage the temperature indicator material 100 and provide erroneous reporting.

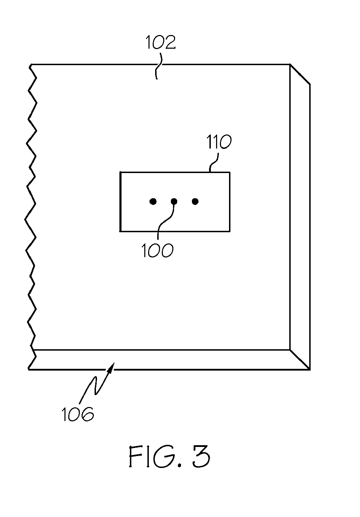

During monitoring, when the pre-determined temperature threshold has been reached, the temperature indicator material 100 will visibly and irreversibly react as best illustrated in FIG. 3. More specifically, in a preferred embodiment, the temperature indicator material 100 will undergo a chemical reaction and liquefy beneath the substantially transparent protective polyimide adhesive film 110. Upon conclusion of the monitoring, this change in visible appearance indicates the exposure of the surface 102 of the aircraft LRU 106 to temperatures in excess of the pre-determined temperature threshold and the need for subsequent maintenance and possible replacement of the aircraft LRU 106.

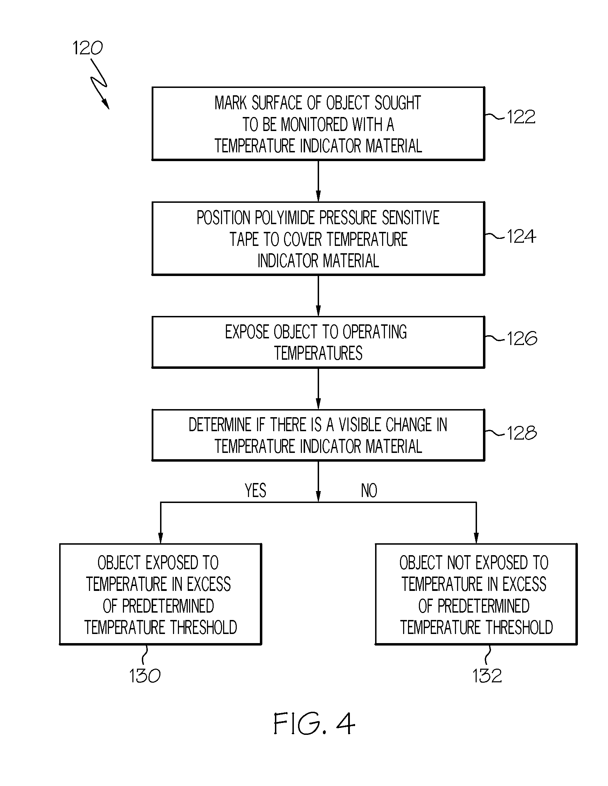

Referring now to FIG. 4, illustrated is a simplified flow chart, generally referenced 120, detailing the steps in an exemplary method of sensing high surface temperatures. As previously described, in the first step 122 the surface of the object, or LRU, that is sought to be monitored is marked with the temperature indicator material 100 (FIG. 1). Next, the substantially transparent protective polyimide adhesive film 110 (FIG. 2) is positioned to cover the temperature indicator material 100, as indicated in step 124. The object or LRU is then exposed to operating temperatures, as indicated in step 126. Next, as indicated in step 128, a determination is made as to whether the temperature indicator material 100 has undergone a reaction, such as a visible change in appearance (i.e. color, transparency, liquefication, etc.). If yes, confirmation may be made that a pre-determined temperature threshold was reached during the operation of the object, as indicated in step 130. If no visible change is present, confirmation may be made that the pre-determined temperature threshold was not reached during operation of the object, as indicated in step 132.

In a preferred embodiment, the reactive change in the temperature indicator material 100 is irreversible. The specific composition of the temperature indicator material 100 is chosen for its reactive properties at a specific temperature threshold. For example, if monitoring of an LRU for exposure to a temperature of 350°C is desired, the specific composition of the temperature indicator material 100 is chosen for its reactive properties to that temperature with a temperature accuracy of +/- 2%. There would be no reaction of the temperature indicator material 100 if a temperature of 340°C was the maximum exposure temperature.

Accordingly, disclosed is an improved method for monitoring and sensing the presence of elevated temperatures on the surface of an object, such as an aircraft component. The method includes the application of a temperature indicator material on the surface of the object to be monitored in a simple marking step, such as with a marker or crayon. An adhesive polyimide film positioned to cover the temperature indicator mark provides protection against external deleterious conditions present in the environment in which the object is located. The temperature indicator material and the polyimide film in combination provide a sensor that is operational to identify temperatures in a range of 300°C-400°C within +/-2% measuring accuracy. While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

**1.** A method of sensing a temperature in excess of a pre-determined temperature threshold on a surface (102) of an object, comprising the steps of:
applying (122) a temperature indicator material (100) to the surface (102) of the object, the temperature indicator material (100) reactive to a pre-determined temperature threshold;
positioning (124) a heat resistive pressure sensitive film (110) over the temperature indicator material (100);
exposing (126) the surface (102) of the object to an operating temperature; and
determining (128) if there is a visible change in the temperature indicator material (100), thereby identifying exposure of the surface (102) of the object to the temperature in excess of the pre-determined temperature threshold.

**2.** The method of claim 1, wherein the temperature indicator material (100) is irreversibly reactive to temperatures in a range of 300°C to 400°C.

**3.** The method of claim 1, wherein the step of applying (122) a temperature indicator material (100) to the surface (102) of the object includes marking the surface (102) with a marker (104) containing the temperature indicator material (100).

**4.** The method of claim 1, wherein the step of applying (122) a temperature indicator material (100) to the surface (102) of the object includes marking the surface (102) with a crayon (104) comprised of the temperature indicator material (100).

**5.** The method of claim 1, wherein the step of determining (128) if there is a visible change in the temperature indicator material (100) includes determining if the temperature indicator material (100) has liquefied.

**6.** The method of claim 1, wherein the step of determining (128) if there is a visible change in the temperature indicator material (100) includes determining if the temperature indicator material (100) has changed from substantially transparent to at least partially opaque.

**6.** The method of claim 1, wherein the step of determining (128) if there is a visible change in the temperature indicator material (100) includes determining if the temperature indicator material (100) has changed to a specific color.

**8.** A method of sensing a temperature in excess of a pre-determined temperature threshold on a surface (102) of a line replaceable unit (106) in an aircraft comprising the steps of:
marking (122) the surface (102) of the line replaceable unit with a temperature indicator material (100) reactive to a pre-determined temperature threshold;
positioning (124) a heat resistive pressure sensitive film (110) over the temperature indicator material (100);
exposing (126) the surface (102) of the line replaceable unit (106) to an operating temperature; and
determining (128) if there is a visible change in the temperature indicator material (100), thereby identifying exposure of the surface (102) of the line replaceable unit (106) to the temperature in excess of the pre-determined temperature threshold.

**9.** The method of claim 8, wherein the line replaceable unit (106) is one of an actuator, a valve, or turbine engine component.

**10.** The method of claim 8, wherein the temperature indicator material (100) is reactive to temperatures in a range of 300°C to 400°C.
